Europäisches Patentamt

European Patent Office

Office européen des brevets

(11) Publication number: **0 022 392**
**A1**

# (12) EUROPEAN PATENT APPLICATION

(21) Application number: **80400920.7**

(22) Date of filing: **20.06.80**

(51) Int. Cl.³: **F 16 D 65/08**
**F 16 D 65/22**

(30) Priority: **04.07.79 BR 7904318**

(43) Date of publication of application:
**14.01.81 Bulletin 81/2**

(84) Designated Contracting States:
**DE FR GB IT**

(71) Applicant: **BENDIX DO BRASIL EQUIPAMENTOS PARA AUTOVEICULOS Ltda.**
**Caixa Postal 1122 Rua Joao Felipe Xavier de Silva, 384**
**Campinas Sao Paulo(BR)**

(72) Inventor: **Correa, Flavio Desanti**
**R. Euclides Vieira 61**
**13100 Campinas-SP(BR)**

(74) Representative: **Brullé, Jean et al,**
**Service Brevets Bendix 44, rue François 1er**
**F-75008 Paris(FR)**

(54) Drum brake assembly.

㊼ The webs (38) of brake shoes (14) have adequate apertures in the ends adjacent to the actuator cam (18), to engage with a roller assembly (20). The apertures have radial sections and lateral flats to engage with radial sections (48) and lateral flats (46) on the ends of roller pin (22). The assembly of roller (20) consists of pin (22), and roller body (24) rotatably mounted on pin (22). A return spring (28) is mounted between the two brake shoes (14). The spring (28) has in one end a semi-circular hook (32) and in the other end a semi-circular hook having an extension (34), to enable its removal or mounting by hand.

./...

FIG_1

FIG_4

The present invention relates to a drum brake assembly of the type comprising a brake spider, on which is mounted a pair of brake shoes, pivotably mounted on one of its ends and actuated by a rotatable cam, disposed between the opposite brake shoe ends. The cam rotation cause a pivoting movement of each shoe around its respective anchor pin, moving them away from the brake assembly center, to force them into engagement with the internal friction face of a brake drum. The shoes employed in this type of brake are fabricated, or cast, with two webs.

In the end of each shoe, actuated by a cam, there is a cam follower roller. The opposite end of said shoe is mounted on an anchor pin. There are two anchor pins and two rollers, one of each for each shoe.

A description of the brake, specially in respect to the anchor pins and shoes, including its mounting and function, is disclosed in the Brazilian Patent Application Nº PI 7805449.

In the present state of the art, and as indicated above, a cam follower roller is provided in the end of each shoe which is actuated by the cam. The function of this roller is to provide an area of contact between the shoe and cam greater than the small area provided by the shoe web, or depending on conditions, by the two brake shoe webs. Another function of the roller is to facilitate and smooth the action of the cam when the latter, in a rotational movement, displaces the shoes from their released position, to force them into engagement with the friction face of the brake drum.

The rollers are generally made as one solid cylindrical part, having smaller diameters in the two ends which fit into semi-circular apertures that are provided in the ends of the webs of the shoes, while the central portion, with a larger diameter, is located between the two webs. The rollers are fastened to the shoes by means which are well known to those skilled in the art.

In order to decelerate or stop the vehicle, the shoes, as are forced outward by means of the cam to engage with the internal face of the brake drum. After having obtained the desired braking effect, the driver of the vehicle releases the brakes. The cam, that in rotational movement moves the shoes away from their released position, now rotates in the opposite direction, and the shoes can return to their released position, biaised by a spring fastened between the two shoes, to force them in constant contact with the cam by means of the rollers. This spring, called shoe return spring, can be fixed to the shoes by different methods well known to those skilled in the art. One of these methods is a pin located between the two webs of each shoe, to which the spring is engaged by means of a substantially semi-circular, hook formed on each extremity of the spring.

Both rollers and spring present certain disadvantages, well known to those skilled in the art. The greatest difficulty with the rollers is that, due to the exposure of the contact area between the roller and the shoe webs to a atmospheric influence as well as accumulation of contaminants in the same area, they size in their seats in the extremities of the shoe webs. Consequently , the rollers will not rotate, and the cam, in its rotational movement, will rub against a fixed surface causing wear both on the roller and on the excentric surface of the cam, thus adversely affecting the functional movements of the brake.

The difficulty with the spring is quite clear in the configuration of the brake described in the Brazilian Patent Application N° 7805449. The spring, as mentioned above, has in each extremity a hook essentially semi-circular to be fixed to the shoes, and it can only be removed with aid of special tools.

To this end, the invention proposes a drum brake assembly of the type comprising a pair of brake shoes pivotally mounted on a brake spider by one of their ends, and a rotating cam actuator disposed between the other ends of said brake shoes to cause a pivoting movement of each shoe around its respective anchor pin, each of said shoe comprising two parallel webs having apertures in said other ends to slidably engage with a cam follower roller assembly characterized in that said roller assembly comprises a pin and a body rotatably and slidably mounted on said pin, wherein said aperture consists of a radial section and two parallel flats, to slidably engage with a radial section and two parallel flats of said roller pin.

The invention will now be described with reference to the accompanying drawings wherein :

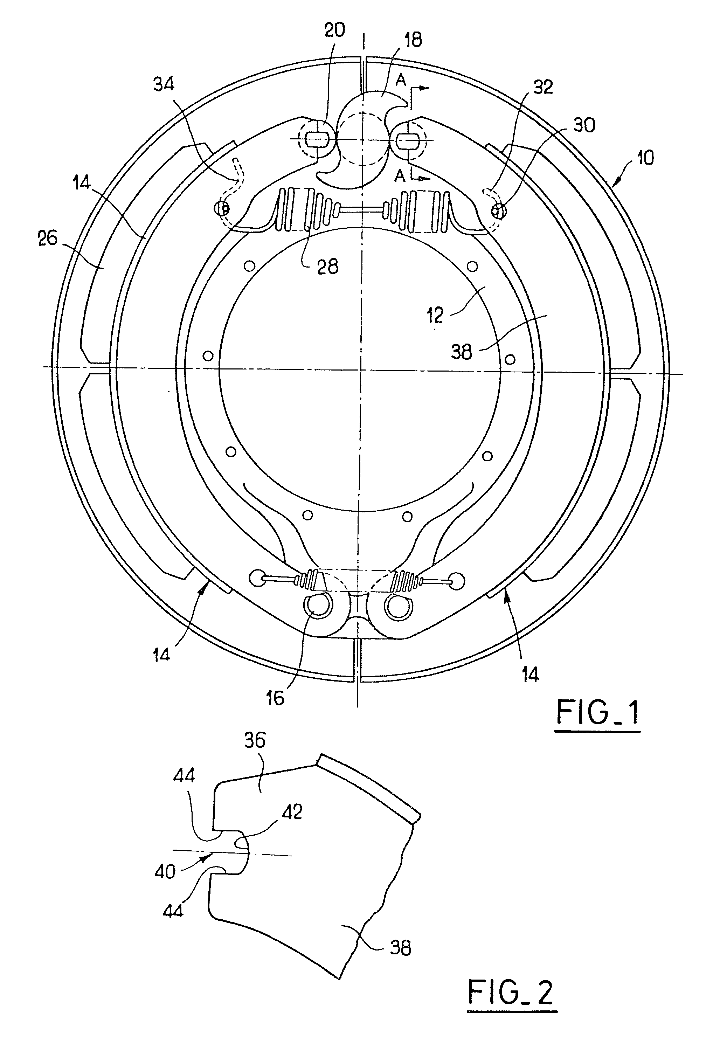

Figure 1 is a front view of a drum brake assembly made pursuant to the teachings of the present invention ;

Figure 2 is a view of one end of the shoe showing the aperture to fit a roller pin ;

Figure 3 is a cross sectional view taken along line A-A of Figure 1 ;

Figure 4 is a view of the end of the shoe with the roller in place ;

Figure 5 is a view of the end ot the shoe showing a second embodiment of the aperture with the roller in place ;

Figure 6 is a view of the return spring showing the new form of fastening hook on one end ; and

Figure 7 is a view of the end of the shoe showing a third embodiment of the aperture with the roller in place.

Referring now to the drawings ; a cam actuated drum brake assembly is indicated by the numeral 10. Assembly (10), is supported by brake spider (12), which is rigidly fastened to a vehicle axle flange (not shown).

Brake assembly (10) includes a pair of brake shoes (14), each of which comprises two parallel shoe webs (38). Each brake shoe is slidably mounted, by one end, on an anchor pin (16), which in turn is mounted in brake spider (12).

Between the extremities of the brake shoes (14), opposite to the anchor pins (16), a cam (18), is located with a rotational movement, actuated by means not shown but well known to those skilled in the art.

Each brake shoe (14) is provided with a roller assembly (20), consisting of one pin (22), and one roller body (24), which functions as a follower of cam (18). When brake (10) is applied, cam (18), rotates to move the shoes outward by means of rollers (20). The shoes pivot through anchor pins (16). This outward displacement of brake shoes (14), forces brake linings (26) into engagement with the internal face of the brake drum (not shown), fastened to the wheel of the vehicle.

When brake (10) is released, the brake shoes (14) and brake lining (26) fastened to the brake shoes, are moved away from the internal face of the brake drum by action of return spring (28), held between the webs of the pair of shoes by means of two pins (30), and hooks (32) and (34).

In the extremities (36) adjacent to cam (18), each web (38) presents a U-shaped aperture (40), which includes a radial section (42) and two flats parallel to each other and intersecting with the radius of said radial section (42).

Roller pins (22), in turn, have on both ends two parallel flats (46), to engage with parallel flats (44) of apertures (40) in the webs (38), of brake shoes (14), while the radial section (48) on both ends of roller pins (22) is engaged with radial section (42) of apertures (40) in the webs (38) of brake shoe (14).

The roller bodies (24) are mounted rotatably and slidably on pins (22) ; and rollers assemblies (20) are mounted slidably in the apertures (40) by means of pins (22).

The tension of spring (28) holds the roller assemblies (20) in contact with cam (18), and there is no necessety of any other means to hold said assemblies in place in relation to shoe 14.

4

Spring (28) presents on both ends semi-circular hooks (32). One of the hook ends (32) has an extension (34) of suitable form to enable removal and mounting of spring (28) by hand, without the aid of any tools.

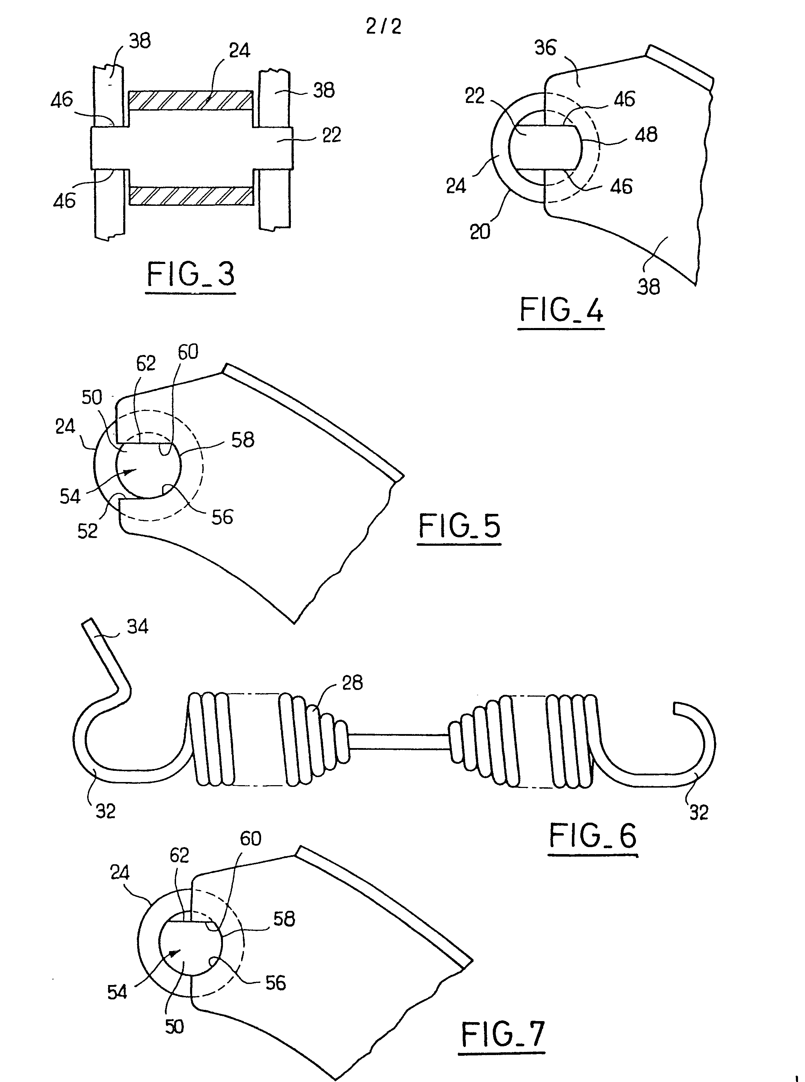

Figure 5 shows another configuration of aperture to fit the roller.

Aperture (54) includes a radial section (56) and two flats (60) and (52), parallel to each other. ·Flat (60) intersects with the radius of radial section (56), while flat (52) is tangent to the radius of the·radial section (56). For this configuration, the roller pin (50) presents in each end only one flat (62), located in the same geometrical.

Figure 7 presents another configuration of aperture to fit the roller, being a variation of the aperture shown in Figure 5. Here the aperture (54) includes a radial section (56) and a plane (60). Plane (60) intersects with the radius of the radial section (56). This configuration accepts the same roller pin (50) as described with reference to Figure 5.

Many modifications and/or variations of the present invention are possible by those skilled in the art and it is intended that these modific- ations and/or variations be included within the scope of the appended claims.

## CLAIMS

1. Drum brake assembly (10) of the type comprising a pair of brake shoes (14) pivotally mounted on a brake spider (12) by one of their ends (16), and a rotating cam actuator (18) disposed between the other ends (36) of said brake shoes to cause a pivoting movement of each shoe around its respective anchor pin (16), each of said shoe comprising two parallel webs (38) having apertures (40) in said other ends (36) to slidably engage with a cam follower roller assembly (20) characterized in that said roller assembly (20) comprises a pin (22) and a body (24) rotatably and slidably mounted on said pin (22).

2. Drum brake assembly according to claim 1, characterized in that said aperture (40) consists of a radial section (42) and two parallel flats (44), to slidably engage with a radial section (48) and two parallel flats (46) of said roller pin (22).

3. Drum brake assembly according to claim 2, characterized in that the roller pin has, at each end, two radial sections (48) and two parallel flats (46), the two parallel flats (46) being equidistant from the center of said roller pin, and intersecting with the two said radial sections (48).

4. Drum brake assembly according to claim 2, characterized in that the two webs (38) of the brake shoe are formed in one end with equal and laterally aligned apertures (40), each of which consisting of a radial section (42) and two parallel flats (44).

5. Drum brake according to claim 2, characterized in that the two parallel flats (44) of aperture (40) are equidistant from the center of said radius of the radial section (42) and intersecting with said radius, the distance between the two said parallel flats (44), being smaller than the roller pin diameter.

6. Drum brake assembly according to claim 1, characterized in that said aperture (54) consists of a radial section (56) and two parallel flats (60) and (52) to engage with a radial section (58) and one lateral flat (62) of said roller pin (50), being that the parallel flat (60) intersects with the radius of radial section (56) and the other parallel flat (52) being tangential to the radius of radial section (56).

7. Drum brake assembly according to claim 6, characterized in that said roller pin (50) has, in both ends, a lateral flat (62), where the two lateral flats (62) intersect with cylindrical part (58) of said pin (50), and are located in the same geometrical plane.

8. Disc brake assembly according to claim 1, characterized in that said aperture (54) consists of a radial section (56) and a flat (60), to engage with a radial section (58) and a lateral flat (62) of said roller pin (50), said flat (60) intersecting with the radius of radial section (56).

9. Disc brake assembly according to any of the preceeding claims, characterized in that it comprises a shoe return spring (28) spring having on each end a semi-circular hook to fasten said spring (28) to said shoes, one of the hooks having an extension (34) of suitable form, to enable removal and mounting of said spring (28) by hand and without aid of tools.

FIG_1

FIG_2

0022392

1/2

0022392

2/2

FIG_3

FIG_4

FIG_5

FIG_6

FIG_7

0022392

EUROPEAN SEARCH REPORT

European Patent Office

Application number

EP 80 40 0920.7

## DOCUMENTS CONSIDERED TO BE RELEVANT

| Category | Citation of document with indication, where appropriate, of relevant passages | Relevant to claim |
|---|---|---|
| | CH - A - 518 466 (DEUTSCHE PERROT-BREMSE) <br> * entirely * | 1-4 |
| | GB - A - 1 378 209 (RUBERY OWEN-ROCKWELL) <br> * entirely * | 1,2 |
| | FR - A - 2 177 357 (LINDE INTERNATIONAL) <br> * fig. 11, position 5 * | 9 |

### CLASSIFICATION OF THE APPLICATION (Int. Cl.3)

F 16 D 65/08

F 16 D 65/22

### TECHNICAL FIELDS SEARCHED (Int.Cl.3)

F 16 D 65/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| Berlin | 14-10-1980 | LUDWIG |

EPO Form 1503.1  06.78